# EUROPÄISCHE PATENTSCHRIFT

(11) **EP 3 856 610 B1**
(45) Veröffentlichungstag und Bekanntmachung des Hinweises auf die Patenterteilung: **22.05.2024**
(21) Anmeldenummer: 19765694.5
(22) Anmeldetag: 05.09.2019
(51) Int. Cl.: B62D 5/00, B62D 6/00

(54) **STEER-BY-WIRE-LENKSYSTEM FÜR EIN KRAFTFAHRZEUG UND VERFAHREN ZUM BETREIBEN EINES STEER-BY-WIRE-LENKSYSTEMS FÜR EIN KRAFTFAHRZEUG**
STEER-BY-WIRE STEERING SYSTEM FOR A MOTOR VEHICLE AND METHOD FOR OPERATING A STEER-BY-WIRE STEERING SYSTEM FOR A MOTOR VEHICLE
SYSTÈME DE DIRECTION À COMMANDE PAR CÂBLE ÉLECTRIQUE POUR UN VÉHICULE À MOTEUR ET PROCÉDÉ POUR FAIRE FONCTIONNER UN SYSTÈME DE DIRECTION À COMMANDE PAR CÂBLE ÉLECTRIQUE POUR UN VÉHICULE À MOTEUR

(30) Priorität: 12.09.2018 DE 102018215557
(43) Veröffentlichungstag der Anmeldung: 04.08.2021
(73) Patentinhaber: Volkswagen Aktiengesellschaft, 38440 Wolfsburg (DE)
(72) Erfinder: DREYER, Dirk, 31655 Stadthagen (DE); HOPP, Christian, 38302 Wolfenbüttel (DE); PÖHLAND, Andreas, 38518 Gifhorn (DE)
(86) Internationale Anmeldenummer: PCT/EP2019/073724
(87) Internationale Veröffentlichungsnummer: WO 2020/053067

(56) Entgegenhaltungen:
- EP-A1- 2 905 201
- DE-A1- 10 032 182
- DE-A1- 10 032 183
- DE-A1- 10 103 404
- DE-A1-102016 004 593
- DE-A1-102018 116 367

## Beschreibung

Die Erfindung betrifft ein Steer-by-wire-Lenksystem für ein Kraftfahrzeug und ein Verfahren zum Betreiben eines Steer-by-wire-Lenksystems für ein Kraftfahrzeug.

Steer-by-wire-Lenksysteme sind typischerweise dadurch gekennzeichnet, dass eine mit der Lenkhandhabe verbundene Eingangswelle keinen mechanischen Durchgriff mehr aufweist, beispielsweise zu einer die Lenkbewegung umsetzenden Zahnstange. Dadurch geht auch das haptische Feedback von der Straße auf die Lenkung zur Lenkhandhabe verloren. Daher ist es bekannt, einen Aktor (z.B. einen Elektromotor) zur Erzeugung einer Reaktionskraft oder, anders ausgedrückt, eines Rückkopplungsmoments vorzusehen, der unter anderem in Abhängigkeit vom eingestellten (Rad-) Lenkwinkel ein Gegenmoment an der Lenkhandhabe erzeugt. Der Lenkwinkel wird dabei üblicherweise anhand einer Zahnstangenposition ermittelt.

Derartige steer-by-wire-Systeme sind beispielsweise aus der DE 101 03 404 A1 oder der DE 100 32 183 A1 bekannt. Aus der EP 2 905 201 A1 ist ein gattungsgemäßes steer-by-wire-Lenksystem bekannt.

Aus Sicherheitsgründen ist es bei technischen Systemen üblich, redundante Komponenten zum Bereitstellen vergleichbarer Funktionen vorzusehen. Dies könnte zum Beispiel auch für Einstelleinrichtungen von Steer-by-wire-Lenksystemen angewandt werden, mit denen die Reaktionskraft eingestellt und/oder eine Stellgröße zum Einstellen eines Radlenkwinkels ausgegeben wird. Durch das Vorsehen redundanter Komponenten werden aber oftmals die Kosten erhöht, insbesondere auch dadurch, dass jeweils funktionsgleiche Kommunikationsverbindungen für die redundante Komponenten bereitgestellt werden müssen.

Der Erfindung liegt das technische Problem zugrunde, ein steer-by-wire-Lenksystem zu verbessern sowie ein verbessertes Verfahren zum Betreiben eines steer-by-wire-Lenksystems zur Verfügung zu stellen.

Dieses Problem wird mit einem Steer-by-wire-Lenksystem für ein Kraftfahrzeug gemäß Anspruch 1 und einem Verfahren zum Betreiben eines Steer-by-wire-Lenksystems für ein Kraftfahrzeug gemäß Anspruch 10 gelöst.

Ein Grundgedanke der Erfindung besteht darin, redundante Einstelleinrichtungen für eine Reaktionskraft und auch eine Zahnstangenposition bereitzustellen, wobei eine in einem störungsfreien Normalbetrieb und die andere vorzugsweise ausschließlich bei auftretenden Störungen zum Einsatz kommt. Somit wird eine redundante oder, anders ausgedrückt, zweikanalige Einstellmöglichkeit für die Reaktionskraft und Zahnstangenposition geschaffen. Zudem sind die Einstelleinrichtungen unterschiedlich ausgebildet, wobei die für den Normalbetrieb vorgesehene Einrichtung z.B. leistungsstärker als die bei Störungen verwendete Einrichtung sein kann. Letztere kann daher kostengünstig ausgebildet werden.

Im Detail wird ein Steer-by-wire-Lenksystem (im Folgenden auch lediglich als Lenksystem bezeichnet) für ein Kraftfahrzeug vorgeschlagen, mit:
- einer vom Fahrer betätigbaren Lenkhandhabe (zum Beispiel ein Lenkrad);
- einem Fahrzeugradaktor, umfassend einen elektrischen Servo-Motor und eine Leistungselektronik, der zum Einstellen eines Radlenkwinkels von mindestens einem lenkbaren Rad des Fahrzeugs eingerichtet ist, wobei der Fahrzeugradaktor auf eine Zahnstange einwirkt;
- einem mit der Lenkhandhabe verbundenen Reaktionskraftaktor (zum Beispiel einem Elektromotor), der zum Erzeugen einer entgegen einer Auslenkung der Lenkhandhabe wirkenden Reaktionskraft eingerichtet ist;
- einer Primäreinstelleinrichtung, die zum Einstellen der von dem Reaktionskraftaktor erzeugten Reaktionskraft eingerichtet ist, und
- einer Rückfalleinstelleinrichtung, die zum Einstellen der von dem Reaktionskraftaktor erzeugten Reaktionskraft (insbesondere ausschließlich) bei einer Fehlfunktion der Primäreinstelleinrichtung eingerichtet ist;
wobei die Primäreinstelleinrichtung ferner dazu eingerichtet ist, eine Stellgröße an den Fahrzeugradaktor zum Einstellen des Radlenkwinkels auszugeben, und die Rückfalleinstelleinrichtung ferner dazu eingerichtet ist, bei einer Fehlfunktion der Primäreinstelleinrichtung eine Stellgröße an den Fahrzeugradaktor zum Einstellen des Radlenkwinkels auszugeben; und wobei die Rückfalleinstelleinrichtung und die Primäreinstelleinrichtung verschiedenartig voneinander ausgebildet sind.

Bei der Primäreinstelleinrichtung kann es sich um eine Regeleinrichtung handeln, die beispielsweise die Reaktionskraft (oder, mit anderen Worten, das Rückkopplungsmoment) regelt. Die Rückfalleinstelleinrichtung kann hingegen primär als Steuerung wirken und beispielsweise einen Wert der Reaktionskraft (d.h. eine Soll-Reaktionskraftvorgabe) ohne IstWert-Erfassung als Steuergröße vorgeben.

Die Primäreinstelleinrichtung und die Rückfalleinstelleinrichtung können jeweils von einem Lenkungssteuergerät des Lenksystems umfasst sein und insbesondere von einem gemeinsamen Lenkungssteuergerät. Vorzugsweise umfassen die Primäreinstelleinrichtung und die Rückfalleinstelleinrichtung unterschiedliche Mikroprozessoren, wobei derjenige der Rückfalleinstelleinrichtung im Vergleich leistungsschwächer ausgebildet sein kann.

Die Primäreinstelleinrichtung und die Rückfalleinstelleinrichtung können unabhängig voneinander Eingangssignale empfangen. Hierfür können sie beispielsweise voneinander unabhängige Eingangs-Kommunikationsverbindungen und/oder Eingänge für Eingangssignale aufweisen. Zusätzlich oder alternativ können die Primäreinstelleinrichtung und die Rückfalleinstelleinrichtung (im Folgenden auch als die Einstelleinrichtungen bezeichnet) unabhängig voneinander Ausgangssignale erzeugen sowie ausgeben. Hierfür können die Einstelleinrichtungen voneinander unabhängige Ausgangs-Kommunikationsverbindungen und/oder Ausgänge für Ausgangssignale aufweisen.

Die Primäreinstelleinrichtung und die Rückfalleinstelleinrichtung können dazu eingerichtet sein, untereinander zu kommunizieren oder zumindest bestimmte Signale untereinander auszutauschen (d.h. wenigstens eine der Einstelleinrichtungen übermittelt ein Signal an die entsprechend andere Einstelleinrichtung oder beide Einstelleinrichtungen übermitteln Signale an die jeweils andere Einstelleinrichtung). Dies kann beispielsweise für eine nachstehend geschilderte Plausibilisierung und/oder Übermittlung eines Lenkhandhabestellungssignals vorgesehen sein.

Weiter können die Primäreinstelleinrichtung und die Rückfalleinstelleinrichtung an unterschiedliche Fahrzeugbusse angeschlossen sein. Bei diesen Fahrzeugbussen kann es sich um Haupt-Fahrzeugbusse zum Beispiel nach CAN-Standard handeln. Es ist bekannt, das Fahrzeuge aus Sicherheitsgründen redundante (Haupt-) Fahrzeugbusse aufweisen können. Das Verbinden der Einstelleinrichtungen mit unterschiedlichen Fahrzeugbussen erhöht zusätzlich die Ausfallsicherheit des Gesamtsystems.

Die beiden Einstelleinrichtungen können jeweils wenigstens eine Recheneinheit umfassen, beispielsweise einen Mikroprozessor, um die Eingangssignale gemäß vorgegebenen Programmanweisungen zu verarbeiten und daraus die Ausgangssignale zu erzeugen. Bei den Ausgangssignalen kann es sich allgemein um eine Soll-Reaktionskraftvorgabe für einen Reaktionskraftaktor und/oder die vorstehend erwähnte Stellgröße für den Fahrzeugradaktor handeln.

In an sich bekannter Weise kann der Fahrzeugradaktor auf eine Zahnstange einwirken und diese beispielsweise nach Maßgabe einer Aktorposition und insbesondere einer Motorrotorlage verlagern. In Kenntnis der Achsgeometrie können in an sich bekannter Weise die Zahnstangenposition, Aktorposition (d.h. Motorrotorlage bzw. -winkel) und/oder der damit einhergehende Radlenkwinkel ineinander umrechenbar sein.

Die Aktorposition kann insbesondere während eines Startbetriebs des Lenksystems mit einem Referenzsensor kalibriert werden. Hierfür kann der Referenzsensor einen Lenkwinkel erfassen (zum Beispiel einen Lenkwinkel der Lenkhandhabe), woraus ein damit zusammenhängender (Start-) Wert des Radlenkwinkels bestimmt werden kann. Ein zunächst relativer (Start-) Wert eines zum Ermitteln der Fahrzeugradaktorposition verwendeten Sensors (zum Beispiel ein Rotorlagesensor) und/oder eine daraus berechnete Zahnstangenpositionsvorgabe kann darauf basierend in einen Absolutwert umgerechnet werden, beispielsweise durch Rückrechnen des ermittelten Radlenkwinkels in einen absoluten Wert der Rotorlage. Auf Basis dieser Kalibrierung kann somit aus einer zunächst relativ, da ausschließlich auf Basis z.B. des Rotorlagesensors ermittelten Zahnstangenpositionsvorgabe eine absolute Positionsvorgabe bestimmt werden, insbesondere auch während des weiteren Betriebs des Lenksystems. Anders ausgedrückt kann auf diese Weise ein Aufstartwert zum Ermitteln der absoluten Rotorlage bestimmt werden.

Durch das verschiedenartige Ausbilden der beiden Einstelleinrichtungen können Kosten gespart werden. Insbesondere kann die Rückfalleinstelleinrichtung günstiger als die Primäreinstelleinrichtung ausgebildet sein, beispielsweise durch eine allgemein leistungsschwächere Auslegung (zum Beispiel hinsichtlich der Regelgüte, Regelgeschwindigkeit und/oder Regelgenauigkeit) und/oder durch weniger Ein- und/oder Ausgangsverbindungen. Dem liegt der Gedanke zugrunde, dass die Rückfalleinstelleinrichtung primär oder ausschließlich für einen Notfallbetrieb vorgesehen sein kann, der nur bei einer nicht häufig auftretenden Fehlfunktion der Primäreinstelleinrichtung aktiviert wird. Gemäß einer Ausführungsform weist die Rückfalleinstelleinrichtung eine geringere Rechenleistung als die Primäregeleinrichtung auf, wobei sich die Rechenleistung zum Beispiel auf die Rechengeschwindigkeit und/oder den Prozessortakt beziehen kann.

Der Fahrzeugradaktor ist vorzugsweise über eine direkte (d. h. im Wesentlichen oder vollständig verzweigungsfreie) Kommunikationsverbindung mit der Primäreinstelleinrichtung verbunden. Beispielsweise können keine weiteren Recheneinheiten oder Komponenten (außer der Fahrzeugradaktor und die Primärregeleinrichtung) über die Kommunikationsverbindung verbunden sein oder hierüber Signale übermitteln. Somit ist eine schnelle und direkte Kommunikation der genannten Einheiten möglich. Zusätzlich oder alternativ kann der Fahrzeugradaktor über einen Fahrzeugbus mit der Rückfalleinstelleinrichtung verbunden sein. Dies hilft bei der Kostenreduktion, da keine gesonderte und insbesondere keine direkte Kommunikationsverbindung mit der Rückfalleinstelleinrichtung vorgesehen werden muss. Stattdessen kann auf einen ohnehin verbauten Fahrzeugbus zurückgegriffen werden, wobei es sich um einen Fahrzeug-Hauptbus zum Beispiel nach CAN-Standard handeln kann.

Gemäß einer Weiterbildung ist die Primäreinstelleinrichtung dazu eingerichtet, eine Soll-Reaktionskraftvorgabe auf Basis wenigstens eines gemessenen Motorstroms (zum Beispiel wenigstens zweier Startorströme) des Reaktionskraftaktors zu erzeugen. Dieser Messwert kann zum Beispiel im Sinne eines Ist-Moments für eine von der Primäreinstelleinrichtung ausgeführte Momentenregelung des Reaktionskraftaktors verwendet werden. Eine solche Momentenregelung ermöglicht eine genaue Einstellung der erzeugten Reaktionskraft.

Zusätzlich oder alternativ kann die Rückfalleinstelleinrichtung dazu eingerichtet sein, eine Soll-Reaktionskraftvorgabe auf Basis eines gemessenen Motorrotorwinkels (bzw. einer Motorrotorlage) des Fahrzeugradaktors zu erzeugen, z.B. auf Basis einer Änderung des Motorrotorwinkels. Insbesondere kann die Rückfalleinstelleinrichtung keine weiteren Eingangssignale zum Ermitteln der Soll-Reaktionskraftvorgabe erhalten und/oder zumindest nicht dieselben wie die Primäreinstelleinrichtung und/oder zumindest nicht Signale bezüglich Motorströmen des Reaktionskraftaktors. Im Gegensatz zu der Primäreinstelleinrichtung kann die Rückfalleinstelleinrichtung die Reaktionskraft im Sinne einer Steuerung vorgeben, ohne Berücksichtigung von ist-Reaktionskraftwerten.

Die Primäreinstelleinrichtung kann wenigstens eine von einem Handlenkmoment und/oder einer Lenkhandhabestellung (zum Beispiel in Form einer Winkelstellung) als Eingangssignal empfangen und, vorzugsweise, darauf basierend eine Soll-Reaktionskraftvorgabe bestimmen. Hierfür kann das Lenksystem einen geeigneten Sensor (zum Beispiel Drehmomentsensor) zum Ermitteln des Handlenkmoments umfassen und/oder einen Positions- bzw. Winkelsensor, der vorzugsweise die absolute Position (d. h. Winkelstellung) der Lenkhandhabe ermittelt. Die genannten Sensoren sind vorzugsweise eigensicher (d.h. weisen eine zweikanalige bzw. redundante Signalerfassung auf). Die Rückfalleinstelleinrichtung ist vorzugsweise nicht oder zumindest nicht direkt, sondern allenfalls über Zwischenkomponenten wie die Primäreinstelleinrichtung, mit derartigen Sensoren verbunden.

Gemäß einer weiteren Ausführungsform ist die Primäreinstelleinrichtung dazu eingerichtet, eine Lenkhandhabestellung als Eingangssignal zu empfangen und die Lenkhandhabestellung an die Rückfalleinstelleinrichtung zu übermitteln.

Weiter kann das Steer-by-wire-Lenksystem für eine Plausibilitätsüberprüfung durch einen Vergleich der von der Primäreinstelleinrichtung und der Rückfalleinstelleinrichtung jeweils ermittelten Soll-Reaktionskraftvorgaben (und/oder Stellgrößen) eingerichtet sein. Hierdurch kann zum Beispiel die Fehlfunktion der Primäreinstelleinrichtung ermittelt werden, wenn deren Soll-Reaktionskraftvorgabe über ein vorgegebenes Maß hinaus von derjenigen der Rückfalleinstelleinrichtung abweicht.

Ferner wird ein Verfahren zum Betreiben von eines Steer-by-wire-Lenksystems für ein Kraftfahrzeug vorgeschlagen, wobei das Steer-by-wire-Lenksystem:
- eine vom Fahrer betätigbare Lenkhandhabe;
- einen Fahrzeugradaktor, umfassend einen elektrischen Servo-Motor und eine Leistungselektronik, der zum Einstellen eines Radlenkwinkels von mindestens einem lenkbaren Rad des Fahrzeugs eingerichtet ist, wobei der Fahrzeugradaktor auf eine Zahnstange einwirkt;
- einen mit der Lenkhandhabe verbundenen Reaktionskraftaktor, der zum Erzeugen einer entgegen einer Auslenkung der Lenkhandhabe wirkenden Reaktionskraft eingerichtet ist; und
- eine Primäreinstelleinrichtung sowie eine Rückfalleinstelleinrichtung umfasst;
wobei mittels der Primäreinstelleinrichtung die von dem Reaktionskraftaktor erzeugte Reaktionskraft eingestellt und eine Stellgröße von der Primäreinstelleinrichtung an den Fahrzeugradktor zum Einstellen des Radlenkwinkels ausgegeben wird, und bei einer Fehlfunktion der Primäreinstelleinrichtung die von dem Reaktionskraftaktor erzeugten Reaktionskraft mittels der Rückfalleinstelleinrichtung eingestellt und die Stellgröße zum Einstellen des Radlenkwinkels von der Rückfalleinstelleinrichtung an den Fahrzeugradktor ausgegeben wird, wobei die Rückfalleinstelleinrichtung und die Primäreinstelleinrichtung verschiedenartig voneinander ausgebildet sind.

Das Verfahren kann jeglichen weiteren Schritt, jegliche Weiterbildung und jegliches weitere Merkmal umfassen, um sämtliche der vorstehenden oder nachstehenden Wechselwirkungen, Betriebszustände und Funktionen bereitzustellen. Insbesondere können jegliche vorstehenden oder nachstehenden Erläuterungen und Weiterbildungen der Vorrichtungsmerkmale auch auf die gleichlautenden Verfahrensmerkmale zutreffen bzw. bei diesen vorgesehen sein. Insbesondere kann das Verfahren mit einer Vorrichtung gemäß jeglichem der vorstehenden oder nachstehenden Aspekte ausführbar sein oder ausgeführt werden. Weiter kann das Verfahren einen Schritt des Ermittelns einer Fehlfunktion der Primäreinstelleinrichtung umfassen, z.B. basierend auf einer hierin erläuterten Plausibilitätsprüfung oder dem Feststellen eines Ausfalls einer Kommunikationsverbindung zwischen der Primäreinstelleinrichtung und dem Fahrzeugradktor.

Im Folgenden wird die Erfindung anhand der beigefügten schematischen Figuren erläutert. In Ihrer Art und/oder Funktion übereinstimmende Merkmale können dabei figurenübergreifend mit den gleichen Bezugszeichen versehen sein. Es stellen dar:
- Fig. 1: ein Steer-by-wire-Lenksystem gemäß einem Ausführungsbeispiel der Erfindung, das ein erfindungsgemäßes Verfahren ausführt; und
- Fig. 2: ein Steer-by-wire-Lenksystem gemäß Stand der Technik.

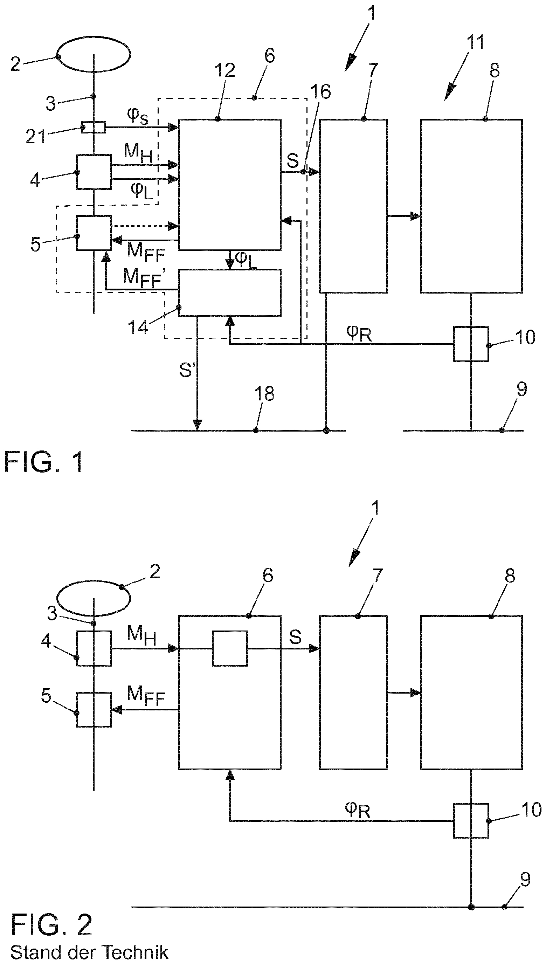

Bevor die Erfindung näher erläutert wird, wird zunächst anhand von Fig. 2 der Stand der Technik näher erläutert.

Das steer-by-wire-Lenksystem 1 umfasst eine Lenkhandhabe 2 in Form eines Lenkrads, die mit einer Eingangswelle 3 verbunden ist. An der Eingangswelle 3 ist ein Momentensensor 4 zur Erfassung eines Handmoments M_{H} des Fahrers angeordnet sowie ein Aktor (Reaktionskraftaktor) 5 zur Erzeugung eines Rückkopplungsmoments M_{FF} an der Lenkhandhabe 2, was dem Erzeugen einer Reaktionskraft entspricht. Weiter umfasst das steer-by-wire-Lenksystem 1 ein Lenkungssteuergerät 6 sowie einen Fahrzeugradaktor 11 umfassend eine Leistungselektronik 7 und einen elektrischen Servo-Motor 8, der mit einer Zahnstange 9 beispielsweise über ein nicht dargestelltes Kugelkopfgetriebe verbunden ist. Der elektrische Servo-Motor 8 ist mit einem Rotorlagesensor 10 ausgebildet, aus dessen Rotorwinkelsignal ϕ_{R} auf die Zahnstangenposition zurückgerechnet werden kann.

In dem Lenkungssteuergerät 6 wird anhand des Handmoments M_{H} und weiterer Eingangsgrößen wie z.B. der Kraftfahrzeuggeschwindigkeit auch ein Radlenkwinkel ermittelt, der durch den Fahrzeugradaktor bzw. dessen Servo-Motor 8 eingestellt werden soll. Hierzu erzeugt das Lenkungssteuergerät 6 eine Stellgröße oder, anders ausgedrückt, ein Stellsignal S für die Leistungselektronik 7. Die Stellgröße S kann auch als Zahnstangenpositionsvorgabe bezeichnet werden, wobei über die entsprechend vorgegebene Zahnstangenposition der gewünschte Radlenkwinkel eingestellt wird. Das Rotorwinkelsignal ϕ_{R} kann als Ist-Signal für das Ermitteln der Stellgröße S verwendet werden (beispielsweise durch Umrechnen in eine Ist-Zahnstangenposition).

In der Fig. 1 ist ein erfindungsgemäßes steer-by-wire-Lenksystem 1 dargestellt, wobei gleiche Elemente mit gleichen Bezugszeichen wie in Fig. 2 bezeichnet sind. Sofern nicht anders angegeben oder ersichtlich, führen diese Elemente auch gleiche Schritte aus bzw. stellen gleiche Funktionen bereit, wie im Zusammenhang mit Figur 2 erläutert.

In Figur 2 erkennt man erneut die Lenkhandhabe 2 sowie die Eingangswelle 3. Diese ist mit einem eigensicheren Drehmomentsensor 4 gekoppelt, um das Handmoment M_{H} des Fahrers zu ermitteln. Der Drehmomentsensor 4 ist ferner dazu eingerichtet ist, eine Winkelstellung der Lenkhandhabe 2 zu ermitteln und als Lenkhandhabestellung ϕ_{L} auszugeben. Es versteht sich, das auch getrennte Sensoren zum Ermitteln des Handmoments M_{H} und der Lenkhandhabestellung ϕ_{L} vorgesehen sein können.

Weiter erkennt man das Lenkungssteuergerät 6, dass in der nachstehend geschilderten Weise Stellgrößen S, S` an eine Leistungselektronik 7 eines Fahrzeugradaktors 11 ausgibt. Letzterer weist wiederum einen Servo-Motor 8 auf, um in der vorstehend geschilderten Weise auf eine Zahnstange 9 einwirken zu können, wobei erneut über einen Rotorlagesensor 10 ein Rotorwinkelsignal ϕ_{R} erzeugt wird, das einen Motorrotorwinkel (bzw. eine Motorrotorlage) des Servo-Motors 8 angibt.

Das erfindungsgemäße Beispiel aus Figur 1 unterscheidet sich von demjenigen der Figur 2 insbesondere hinsichtlich des Lenkungssteuergeräts 6. Dieses umfasst zwei getrennte Einstelleinrichtungen 12, 14, die jeweils über einen eigenen Mikroprozessor verfügen. Entgegen der gezeigten Variante können die Primäreinstelleinrichtung 12 und die Rückfalleinstelleinrichtung 14 auch baulich voneinander getrennt sein und/oder als voneinander unabhängige Lenkungssteuergeräte 6 ausgebildet sein.

Genauer gesagt umfasst das Lenkungssteuergerät 6 eine Primäreinstelleinrichtung 12, die als eine Regeleineinrichtung zum Erzeugen des Rückkopplungsmoments M_{FF} ausgebildet ist, und eine Rückfalleinstelleinrichtung 14, die als eine Steuereinrichtung zum Erzeugen des Rückkopplungsmoments M_{FF}' ausgebildet ist. Die nachstehend erläuterten Ausgangssignale der Rückfalleinstelleinrichtung 14 werden nur bei einer Fehlfunktion der Primäreinstelleinrichtung 12 erzeugt und/oder nur dann für eine Steuerung bzw. Regelung weiterer Komponenten des Lenksystems 1 verwendet. Hierzu kann zwischen den Ausgangssignalen gewechselt werden, bspw. durch eine in dem Reaktionskraftaktor 5 integrierte Umschalteinrichtung.

Die Primäreinstelleinrichtung 12 erhält als Eingangssignal zumindest das Handmoment M_{H} und optional auch die Lenkhandhabestellung ϕ_{L}. Die Primäreinstelleinrichtung 12 kann auch Motorstromsignale des Reaktionskraftaktors 5 erhalten (z.B. wenigstens zwei Statorstromsignale) und daraus einen Ist-Rückkopplungsmoment M_{FF} zu ermitteln. Dies ist in Fig. 1 durch den strichlierten Pfeil zwischen dem Reaktionskraftaktor 5 und der Primäreinstelleinrichtung 12 angedeutet. Darauf basierend kann die Primäreinstelleinrichtung 12 im Sinne einer Regeleinrichtung das Rückkopplungsmoment M_{FF} regeln und präzise einstellen.

Weiter gibt die Primäreinstelleinrichtung 12 eine Stellgröße S aus, die analog zu dem vorigen Beispiel aus Figur 2 für ein Einstellen der Zahnstangenposition verwendet wird. Hierfür ist die Primäreinstelleinrichtung 12 über eine direkte Kommunikationsverbindung 16 mit der Leistungselektronik 7 verbunden (d. h. über eine Kommunikationsverbindung 16, die ausschließlich für die Kommunikation zwischen der Primäreinstelleinrichtung 12 und der Leistungselektronik 7 ausgelegt ist, beispielsweise da keine weiteren Komponenten darauf zugreifen).

Wie geschildert, gibt die Primäreinstelleinrichtung 12 als eine Reaktionskraft das Rückkopplungsmoment M_{FF} aus. Nicht gezeigt ist schließlich, dass die Primäreinstelleinrichtung 12 an einem Fahrzeug-Kommunikationsbus angeschlossen sein kann, der vorzugsweise jedoch verschieden von einem nachstehend erläuterten Fahrzeug-Kommunikationsbus 18 ist, an den die Rückfalleinstelleinrichtung 14 angeschlossen ist. Hierbei handelt es sich vorzugsweise um einen von zwei redundant vorgesehenen Fahrzeug-Haupt-Kommunikationsbussen nach dem CAN-Standard.

Die Primäreinstelleinrichtung 12 erhält vorzugsweise von einem Referenzsensor 21 ferner ein Signal bezüglich einer Lenkhandhabestartstellung ϕₛ. Dieses gibt die absolute Lenkhabestellung bei einem Start des Lenksystems 1 an und kann dazu verwendet werden, eine zunächst rein relativ mit dem Sensor 10 erfasste Rotorlage zu kalibrieren bzw. hieraus eine absolute Rotorlage zu bestimmen. Somit kann statt einer zunächst nur relativ ermittelbaren Zahnstangenpositionsvorgabe eine absolute Zahnstangenpositionsvorgabe bestimmt werden, da die Lenkhandhabestartstellung ϕₛ den (Start-) Radlenkwinkel ausgibt, aus dem eine absolute Start-Rotorlage als Aufstartwert ermittelbar ist.

Die Rückfalleinstelleinrichtung 14 ist nicht mit dem Sensor 4 verbunden und erhält insbesondere nicht das Handmoment M_{H}. Hierdurch können an der Rückfalleinstelleinrichtung 14 weniger Anschlüsse (bzw. Signaleingänge) vorgesehen werden, was die Komplexität und Kosten der Rückfalleinstelleinrichtung 14 reduziert. Insbesondere ermöglicht dies aber auch eine geringere Anzahl an Eingangssignalen, so dass die Primäreinstelleinrichtung 12 mit einer geringeren Rechenleistung ausgebildet werden kann. Optional kann die Rückfalleinstelleinrichtung 14 über die Primäreinstelleinrichtung 12 aber indirekt die Lenkhandhabestellung ϕ_{L} erhalten.

Weiter erhält die Rückfalleinstelleinrichtung 14, wie im Übrigen auch die Primäreinstelleinrichtung 12, das Rotorwinkelsignal ϕ_{R}. Hieraus errechnet die Rückfalleinstelleinrichtung 14 ein Rückkopplungsmoment M_{FF}'. Da das Rückkopplungsmoment M_{FF}' im Gegensatz zu dem Rückkopplungsmoment M_{FF} der Primäreinstelleinrichtung 12 nicht anhand von Motorströmen des Reaktionskraftaktors 5 berechnet bzw. eingeregelt wird, kann die Rückfalleinstelleinrichtung 14 wiederum vereinfacht und somit kostengünstiger ausgebildet werden. Damit einhergehende Genauigkeitsverluste können in Kauf genommen werden, da die Rückfalleinstelleinrichtung 14 lediglich für einen vergleichsweise selten auftretenden Notfallbetrieb vorgesehen ist. Die Rückfalleinstelleinrichtung 14 agiert somit als eine Steuereinrichtung, in dem sie das Rückkopplungsmoment M_{FF}' ohne eine damit zusammenhängende Ist-Werterfassung als Steuergröße vorgibt.

Weiter gibt die Rückfalleinstelleinrichtung 14 auch eine Stellgröße S` aus, wobei es sich wiederum um eine Zahnstangenpositionsvorgabe handelt. Dies erfolgt jedoch nicht über eine direkte Kommunikationsverbindung 16, sondern über einen Fahrzeug-Kommunikationsbus 18, an den auch die Leistungselektronik 7 angeschlossen ist. Hierdurch können Kosten gespart werden, da der Fahrzeug-Kommunikationsbus 18 im Gegensatz zu einer etwaigen direkten Kommunikationsverbindung 16 ohnehin vorhanden ist.

Die Ausgangssignale M_{FF}', S` der Rückfalleinstelleinrichtung 14 werden nur dann für eine Steuerung der Leistungselektronik 7 und des Reaktionskraftaktors 5 verwendet, wenn eine Fehlfunktion der Primäreinstelleinrichtung 12 festgestellt wird. Hierfür kann eine Plausibilitätsüberprüfung des Ausgangssignals M_{FF} der Primäreinstelleinrichtung 12 durchgeführt werden, zum Beispiel durch einen Vergleich mit dem von der Rückfalleinstelleinrichtung 14 ermittelten Rückkopplungsmoment M_{FF}', welches aber zunächst nicht dazu verwendet wird, um den Aktor 5 zu steuern. Ein solcher Vergleich kann durch nicht dargestellte weitere Steuerkomponenten des Lenkungssteuergeräts 6 durchgeführt werden. Eine Fehlfunktion kann auch durch einen Ausfall der Kommunikationsverbindung 16 auftreten bzw. anhand eines solchen Ausfalls erkannt werden.

Bei Detektieren einer Fehlfunktion kann allgemein auch die Spannungsversorgung der Leistungselektronik 7 auf eine Rückfallversorgung umgeschaltet werden, um eine sicheren Weiterbetrieb zu gewährleisten.

Zum Überprüfen einer jeweils korrekten Funktionsweise können zwischen der Primäreinstelleinrichtung 12 und Rückfalleinstelleinrichtung 14 auch Testsignale (z.B. Berechnungsvorschriften) übertragen werden.

Mit der gezeigten Lösung wird ferner allgemein ermöglicht, einen weitestgehend herkömmlichen Fahrzeugradaktor 11 zu verwenden und/oder diesen einkanalig auszubilden, da hier nur wahlweise zwischen den Stellgrößen S, S` als Eingangsgröße gewechselt wird.

Insgesamt werden mit dem gezeigten System und den hierüber bereitgestellten Redundanzen die Betriebssicherheit bzgl. des Ermittelns der Stellgröße S, S` bzw. einer Zahnstangenpositionsvorgabe und auch des Erzeugens eines Rückkopplungsmoments M_{FF}, M_{FF}' verbessert. Durch das verschiedenartige Ausbilden der Primäreinstelleinrichtung 12 und Rückfalleinstelleinrichtung 14 erfolgt dies zudem kostengünstig, insbesondere da die Rückfalleinstelleinrichtung 14 im Vergleich kostengünstiger ausgebildet werden kann.

### Bezugszeichenliste

- 1: steer-by-wire-Lenksystem
- 2: Lenkhandhabe
- 3: Eingangswelle
- 4: Momentensensor
- 5: Reaktionskraftaktor
- 6: Lenkungssteuergerät
- 7: Leistungselektronik
- 8: Servo-Motor
- 9: Zahnstange
- 10: Rotorlagesensor
- 11: Fahrzeugradaktor
- 12: Primäreinstelleinrichtung
- 14: Rückfalleinstelleinrichtung
- 16: Kommunikationsverbindung
- M_{FF}: Soll-Reaktionskraftvorgabe (Primärregeleinrichtung)
- M_{FF'}: Soll-Reaktionskraftvorgabe (Rückfallregeleinrichtung)
- M_{H}: Handlenkmoment
- ϕ_{L}: Lenkhandhabestellung
- ϕ_{R}: Rotorwinkelsignal
- ϕₛ: Lenkhandhabestartstellung

## Patentansprüche

1. Steer-by-wire-Lenksystem (1) für ein Kraftfahrzeug, mit:
- einer vom Fahrer betätigbaren Lenkhandhabe (2);
- einem Fahrzeugradaktor (11), der zum Einstellen eines Radlenkwinkels von mindestens einem lenkbaren Rad des Fahrzeugs eingerichtet ist, wobei der Fahrzeugradaktor (11) eine Leistungselektronik (7) und einen Elektromotor (8) aufweist, wobei der Fahrzeugradaktor (11) auf eine Zahnstange (9) einwirkt;
- einem mit der Lenkhandhabe (2) verbundenen Reaktionskraftaktor (5), der zum Erzeugen einer entgegen einer Auslenkung der Lenkhandhabe (2) wirkenden Reaktionskraft eingerichtet ist;
- einer Primäreinstelleinrichtung (12), die zum Einstellen der von dem Reaktionskraftaktor (5) erzeugten Reaktionskraft eingerichtet ist, und
- einer Rückfalleinstelleinrichtung (14), die zum Einstellen der von dem Reaktionskraftaktor (5) erzeugten Reaktionskraft bei einer Fehlfunktion der Primäreinstelleinrichtung (12) eingerichtet ist;
wobei die Primäreinstelleinrichtung (12) ferner dazu eingerichtet ist, eine Stellgröße (S) zum Einstellen des Radlenkwinkels auszugeben, und die Rückfalleinstelleinrichtung (14) ferner dazu eingerichtet ist, bei einer Fehlfunktion der Primäreinstelleinrichtung (12) eine Stellgröße (S`) zum Einstellen des Radlenkwinkels auszugeben; und
wobei die Rückfalleinstelleinrichtung (14) und die Primäreinstelleinrichtung (12) verschiedenartig voneinander ausgebildet sind.

2. Steer-by-wire-Lenksystem (1) nach Anspruch 1,
wobei die Rückfalleinstelleinrichtung (14) eine geringere Rechenleistung als die Primäreinstelleinrichtung (12) aufweist.

3. Steer-by-wire-Lenksystem (1) nach einem der vorangehenden Ansprüche,
wobei der Reaktionskraftaktor (11) über eine direkte Kommunikationsverbindung (16) mit der Primäreinstelleinrichtung (12) verbunden ist.

4. Steer-by-wire-Lenksystem (1) nach einem der vorangehenden Ansprüche,
wobei der Reaktionskraftaktor (11) über einen Fahrzeugbus (18) mit der Rückfalleinstelleinrichtung (14) verbunden ist.

5. Steer-by-wire-Lenksystem (1) nach einem der vorangehenden Ansprüche,
wobei die Primäreinstelleinrichtung (12) eingerichtet ist, eine Soll-Reaktionskraftvorgabe (M_{FF}) auf Basis wenigstens eines gemessenen Motorstroms des Reaktionskraftaktors (5) zu erzeugen.

6. Steer-by-wire-Lenksystem (1) nach einem der vorangehenden Ansprüche,
wobei die Rückfalleinstelleinrichtung (14) eingerichtet ist, eine Soll-Reaktionskraftvorgabe (M_{FF}') auf Basis eines gemessenen Motorrotorwinkels des Fahrzeugradaktors (11) zu erzeugen.

7. Steer-by-wire-Lenksystem (1) nach einem der vorangehenden Ansprüche,
wobei die Primäreinstelleinrichtung (12) wenigstens eine von einem Handlenkmoment (M_{H}) und einer Lenkhandhabestellung (ϕ_{L}) als Eingangssignal empfängt.

8. Steer-by-wire-Lenksystem (1) nach einem der vorangehenden Ansprüche,
wobei die Primäreinstelleinrichtung (12) eine Lenkhandhabestellung als Eingangssignal empfängt und dazu eingerichtet ist, die Lenkhandhabestellung (ϕ_{L}) an die Rückfalleinstelleinrichtung (14) zu übermitteln.

9. Steer-by-wire-Lenksystem (1) nach einem der vorangehenden Ansprüche,
wobei das Steer-by-wire-Lenksystem (1) für eine Plausibilitätsüberprüfung durch einen Vergleich der von der Primäreinstelleinrichtung (12) und der Rückfalleinstelleinrichtung (14) jeweils ermittelten Soll-Reaktionskraftvorgaben (M_{FF}, M_{FF}') eingerichtet ist.

10. Verfahren zum Betreiben eines Steer-by-wire-Lenksystems (1) für ein Kraftfahrzeug, wobei das Steer-by-wire-Lenksystem (1):
- eine vom Fahrer betätigbare Lenkhandhabe (2);
- einen Fahrzeugradaktor (11) zum Einstellen eines Radlenkwinkels von mindestens einem lenkbaren Rad des Fahrzeugs, wobei der Fahrzeugradaktor (11) eine Leistungselektronik (7) und einen Elektromotor (8) aufweist, wobei der Fahrzeugradaktor (11) auf eine Zahnstange (9) einwirkt;
- einem mit der Lenkhandhabe (2) verbundenen Reaktionskraftaktor (5) zum Erzeugen einer entgegen einer Auslenkung der Lenkhandhabe (2) wirkenden Reaktionskraft; und
- eine Primäreinstelleinrichtung (12) sowie eine Rückfalleinstelleinrichtung (14) umfasst;
wobei mittels der Primäreinstelleinrichtung (12) die von dem Reaktionskraftaktor (5) erzeugte Reaktionskraft eingestellt und eine Stellgröße (S) von der Primäreinstelleinrichtung (12) an den Fahrzeugradaktor (11) zum Einstellen des Radlenkwinkels ausgegeben wird, und
wobei bei einer Fehlfunktion der Primäreinstelleinrichtung (12) die von dem Reaktionskraftaktor (5) erzeugte Reaktionskraft mittels der Rückfalleinstelleinrichtung (14) eingestellt sowie die Stellgröße (S) zum Einstellen des Radlenkwinkels mittels der Rückfalleinstelleinrichtung (14) an den Fahrzeugradaktor (11) ausgegeben wird,
wobei die Rückfalleinstelleinrichtung (12) und die Primäreinstelleinrichtung (14) verschiedenartig voneinander ausgebildet sind.

## Claims

1. Steer-by-wire steering system (1) for a motor vehicle, comprising:
- a steering handle (2) which can be operated by the driver;
- a vehicle wheel actuator (11) which is configured for adjusting a wheel steering angle of at least one steerable wheel of the vehicle, wherein the vehicle wheel actuator (11) has a power electronics system (7) and an electric motor (8), wherein the vehicle wheel actuator (11) acts on a toothed rack (9);
- a reaction force actuator (5) which is connected to the steering handle (2) and is configured for generating a reaction force acting against a deflection of the steering handle (2);
- a primary adjusting device (12) which is configured for adjusting the reaction force generated by the reaction force actuator (5), and
- a fallback adjusting device (14) which is configured for adjusting the reaction force generated by the reaction force actuator (5) in the event of a malfunction of the primary adjusting device (12); wherein the primary adjusting device (12) is further configured to output a manipulated variable (S) for adjusting the wheel steering angle, and the fallback adjusting device (14) is further configured to output a manipulated variable (S') for adjusting the wheel steering angle in the event of a malfunction of the primary adjusting device (12); and
wherein the fallback adjusting device (14) and the primary adjusting device (12) are designed differently from each another.

2. Steer-by-wire steering system (1) according to Claim 1,
wherein the fallback adjusting device (14) has less computational power than the primary adjusting device (12) .

3. Steer-by-wire steering system (1) according to either of the preceding claims,
wherein the reaction force actuator (11) is connected to the primary adjusting device (12) via a direct communication link (16).

4. Steer-by-wire steering system (1) according to any of the preceding claims,
wherein the reaction force actuator (11) is connected to the fallback adjusting device (14) via a vehicle bus (18) .

5. Steer-by-wire steering system (1) according to any of the preceding claims,
wherein the primary adjusting device (12) is configured to generate a predefined setpoint reaction force (M_{FF}) on the basis of at least one measured motor current of the reaction force actuator (5).

6. Steer-by-wire steering system (1) according to any of the preceding claims,
wherein the fallback adjusting device (14) is configured to generate a predefined setpoint reaction force (M_{FF}') on the basis of a measured motor rotor angle of the vehicle wheel actuator (11).

7. Steer-by-wire steering system (1) according to any of the preceding claims,
wherein the primary adjusting device (12) receives at least one of either a manual steering torque (M_{H}) and a steering handle position (ϕ_{L}) as an input signal.

8. Steer-by-wire steering system (1) according to any of the preceding claims,
wherein the primary adjusting device (12) receives a steering handle position as an input signal and is configured to transmit the steering handle position (ϕ_{L}) to the fallback adjusting device (14).

9. Steer-by-wire steering system (1) according to any of the preceding claims,
wherein the steer-by-wire steering system (1) is configured for a plausibility check by comparing the predefined setpoint reaction forces (M_{FF}, M_{FF}') respectively determined by the primary adjusting device (12) and the fallback adjusting device (14).

10. Method for operating a steer-by-wire steering system (1) for a motor vehicle, wherein the steer-by-wire steering system (1) comprises:
- a steering handle (2) which can be operated by the driver;
- a vehicle wheel actuator (11) for adjusting a wheel steering angle of at least one steerable wheel of the vehicle, wherein the vehicle wheel actuator (11) has a power electronics system (7) and an electric motor (8), wherein the vehicle wheel actuator (11) acts on a toothed rack (9);
- a reaction force actuator (5), which is connected to the steering handle (2), for generating a reaction force acting against a deflection of the steering handle (2); and
- a primary adjusting device (12) and a fallback adjusting device (14);
wherein the reaction force generated by the reaction force actuator (5) is adjusted by means of the primary adjusting device (12) and a manipulated variable (S) is output by the primary adjusting device (12) to the vehicle wheel actuator (11) for adjusting the wheel steering angle, and
wherein, in the event of a malfunction of the primary adjusting device (12), the reaction force generated by the reaction force actuator (5) is adjusted by means of the fallback adjusting device (14) and the manipulated variable (S) is output to the vehicle wheel actuator (11) by means of the fallback adjusting device (14) for adjusting the wheel steering angle,
wherein the fallback adjusting device (12) and the primary adjusting device (14) are designed differently from each another.

## Revendications

1. Système de direction à commande électrique (1) destiné à un véhicule automobile, ledit système comprenant :
- une manette de direction (2) actionnable par le conducteur ;
- un actionneur de roue de véhicule (11) qui est conçu pour régler un angle de braquage d'au moins une roue directrice du véhicule, l'actionneur de roue de véhicule (11) comportant une électronique de puissance (7) et un moteur électrique (8), l'actionneur de roue de véhicule (11) agissant sur une crémaillère (9) ;
- un actionneur de force de réaction (5) qui est relié à la manette de direction (2) et qui est conçu pour générer une force de réaction s'opposant à une déviation de la manette de direction (2) ;
- un dispositif de réglage principal (12) qui est conçu pour régler la force de réaction générée par l'actionneur de force de réaction (5), et
- un dispositif de réglage de substitution (14) qui est conçu pour régler la force de réaction, générée par l'actionneur de force de réaction (5), en cas de dysfonctionnement du dispositif de réglage principal (12) ;
le dispositif de réglage principal (12) étant en outre conçu pour délivrer une grandeur de réglage (S) destinée à régler l'angle de braquage, et le dispositif de réglage de substitution (14) étant en outre conçu pour délivrer une grandeur de réglage (S') destinée à régler l'angle de braquage en cas de dysfonctionnement du dispositif de réglage principal (12) ; et
le dispositif de réglage de substitution (14) et le dispositif de réglage principal (12) étant conçus de manière différente.

2. Système de direction à commande électrique (1) selon la revendication 1,
le dispositif de réglage de substitution (14) ayant une puissance de calcul inférieure à celle du dispositif de réglage principal (12).

3. Système de direction à commande électrique (1) selon l'une des revendications précédentes, l'actionneur de force de réaction (11) étant relié au dispositif de réglage principal (12) par le biais d'une liaison de communication directe (16).

4. Système de direction à commande électrique (1) selon l'une des revendications précédentes, l'actionneur de force de réaction (11) étant relié au dispositif de réglage de substitution (14) par le biais d'un bus de véhicule (18).

5. Système de direction à commande électrique (1) selon l'une des revendications précédentes,
le dispositif de réglage principal (12) étant conçu pour générer une spécification de force de réaction cible (M_{FF}) sur la base d'au moins un courant de moteur mesuré de l'actionneur de force de réaction (5).

6. Système de direction à commande électrique (1) selon l'une des revendications précédentes,
le dispositif de réglage de substitution (14) étant conçu pour générer une spécification de force de réaction cible (M_{FF}') sur la base d'un angle de rotor de moteur mesuré de l'actionneur de roue de véhicule (11).

7. Système de direction à commande électrique (1) selon l'une des revendications précédentes,
le dispositif de réglage principal (12) recevant un couple de direction manuelle (M_{H}) et/ou une position de manette de direction (ϕ_{L}) comme signal d'entrée.

8. Système de direction à commande électrique (1) selon l'une des revendications précédentes,
le dispositif de réglage principal (12) recevant une position de manette de direction comme signal d'entrée et étant conçu pour transmettre la position de manette de direction (ϕ_{L}) au dispositif de réglage de substitution (14).

9. Système de direction à commande électrique (1) selon l'une des revendications précédentes,
le système de direction à commande électrique (1) étant conçu pour effectuer un contrôle de plausibilité par comparaison des spécifications de force de réaction cible (M_{FF}, M_{FF}') déterminées par le dispositif de réglage principal (12) et le dispositif de réglage de substitution (14).

10. Procédé de fonctionnement d'un système de direction à commande électrique (1) destiné à un véhicule automobile, le système de direction à commande électrique (1) comprenant :
- une manette de direction (2) actionnable par le conducteur ;
- un actionneur de roue de véhicule (11) destiné à régler un angle de braquage d'au moins une roue directrice du véhicule, l'actionneur de roue de véhicule (11) comportant une électronique de puissance (7) et un moteur électrique (8), l'actionneur de roue de véhicule (11) agissant sur une crémaillère (9) ;
- un actionneur de force de réaction (5) relié à la manette de direction (2) pour générer une force de réaction s'opposant à une déviation de la manette de direction (2) ; et
- un dispositif de réglage principal (12) et un dispositif de réglage de substitution (14) ;
la force de réaction générée par l'actionneur de force de réaction (5) étant réglée au moyen du dispositif de réglage principal (12) et une grandeur de réglage (S) étant délivrée par le dispositif de réglage principal (12) à l'actionneur de roue de véhicule (11) pour régler l'angle de braquage, et
en cas de dysfonctionnement du dispositif de réglage principal (12), la force de réaction générée par l'actionneur de force de réaction (5) étant réglée au moyen du dispositif de réglage de substitution (14) et la grandeur réglée (S) étant délivrée à l'actionneur de roue de véhicule (11) au moyen du dispositif de réglage de substitution (14) afin de régler l'angle de braquage, le dispositif de réglage de substitution (12) et le dispositif de réglage principal (14) étant conçus de manière différente.
